Europäisches Patentamt

European Patent Office

Office européen des brevets

(11) Publication number: **0 049 090**
A1

# EUROPEAN PATENT APPLICATION

(21) Application number: **81304351.0**

(22) Date of filing: **22.09.81**

(51) Int. Cl.³: **G 01 N 19/04,** G 01 N 29/04

(30) Priority: **01.10.80 GB 8031604**

(43) Date of publication of application: **07.04.82**
**Bulletin 82/14**

(84) Designated Contracting States: **AT BE CH DE FR GB IT
LI LU NL SE**

(71) Applicant: **Burks, A. Edward and Green, J. Keith, Trading
as Burks, Green & Partners Potterdike House Lombard
Street, Newark Nottinghamshire NG24 1XG (GB)**

(72) Inventor: **Burks, A. Edward, Potterdike House Lombard
Street, Newark Nottinghamshire, NG24 1XG (GB)**

(74) Representative: **Wilson, Nicholas Martin et al, WITHERS
& ROGERS 4 Dyer's Buildings Holborn, London.
EC1N 2JT (GB)**

(54) **Testing mechanism for floors.**

(57) A testing mechanism for floors has a chassis supported for movement across a floor upon two wheels (4) having an axle (10) therebetween. The chassis carries a movable rod (6) supported in a position of rest just above floor level by a first spring (9). The rod (6) is projected against the floor by means including a second spring (7) and a rotatable star wheel (5), engageable with a projection (12) on the rod (6) and operable to retract the rod against the spring (7). Disengagement of the star wheel from the projection causes the spring (7) to direct the rod (6) against the floor. The star wheel (5) is connected to the axle (10) by a unidirectional ratchet (20) so that it is only operable during forward movement.

## "TESTING MECHANISM FOR FLOORS"

This invention relates to a device for testing surfaces, particularly the soundness of floor finishes.

At present, flooring in warehouses and the like normally consists of a concrete screed or overlay laid upon a concrete base. Over recent years bulk handling of goods in warehouses has resulted in more rigorous requirements for flooring. The wear and dusting of the concrete surface under the continual tracking of fork lift trucks and other machinery required for handling is often a serious nuisance. The solution to this problem has been to use denser hardwearing concrete in the overlay.

The most common of overlay are granolithic concrete and suitably strong tiles, but mastic asphalt and resin based compounds are also sometimes used. Although the application of these finishes has effectively solved the dusting problem it has brought with it new problems, the most common being lack of bond of the overlay to the concrete base. In the case of concrete granolithic finishes inadequate preparation of the surface of the concrete slab in combination with shrinkage of the granolithic overlay results in the finish "curling" away from the slab. The floor then sounds hollow and is susceptible to being cracked by traffic. For a tiled finish a similar hollowness and susceptibility can occur. Thus, in order to ensure that a floor was sound before it has been accepted from the flooring contractor it has been necessary to laboriously "sound" the floor by hand, which is both time consuming and tiring.   The same method has also been used for identifying hollow areas of monolithic floors which have been suspected of being defective.

There have been various prior proposals for testing surface conditions but these are either too complicated or inapplicable to the problem and are considered of only marginal interest in relation to the present invention.   U.K. Patent Specification 1523295, for example, discloses a method and apparatus for inspecting the bond between layers of a stratified material by non-destructive testing by sensing the properties of the material under reduced pressure.   The inspection is achieved by inducing mechanical or acoustic vibrations using a probe which is pressed against the material with a constant static force and then sensing variable parameters such as resonance with an appropriate transducer.

Another proposal is found in U.K. Patent Specification 1521252.   In that specification an electro-hydraulic or electro-dynamic vibrator is housed in a vehicle and is positioned and attached to the surface to provide a specific vibration input. The vibrator then induces vibratory motion in the surface at a single discrete frequency producing compressive stress waves. Reflected vibration waves are detected at spaced locations on the surface by suitably positioned sensors.

In U.S. Patent Specification 3813929 there is disclosed apparatus for testing the condition of soil under various different loadings using a footing member which is firmly in engagement with the ground at all times. The soil condition is sensed by determining the shear-modulus of the soil by applying an oscillating torque to the footing member under the different loads.

Finally, U.S. Patent Specification 3477283 discloses a ground surface hardness tester for attachment to a vehicle wheel and including a penetrating rod which is biassed beyond the periphery of the wheel by a compression spring. As the wheel rotates the penetrating rod will come into contact with the surface and the degree of penetration of the rod end into the ground provides an indication of the load carrying capacity thereof.

According to the present invention a testing mechanism for surfaces such as floors comprises traverse means for supporting the mechanism for movement upon the surface being tested, a movable sounding element supported so as normally in use to lie above surface level, and means for projecting the sounding element against the surface so' as to sound the surface.

Preferably the traverse means comprises two spaced wheels with an axle between but other traverse means such as track laying means may be used as an alternative. The movable sounding element may be a vertical rod biassed into its normal rest position by a spring so that, as it is projected against the floor the spring damps oscillations of the rod due to the rebound from the floor surface.

The projecting means may comprise a movable actuator, engageable with the movable element at predetermined intervals and operable to retract the movable element against means biassing the movable element in the opposite direction. The movable element, on release of the actucator, being projected against the loor by the stored energy in the biassing means.

The actuator may be a rotatable star wheel engageable with an abutment on the movable element, or a chain drive actuator, or cooperable cam means, or a manual operable catch operated at the discretion of the user.

Therefore in a preferred arrangement a testing mechanism for floors comprises traverse means for supporting the mechanism for movement upon the floor being tested, a movable sounding element supported in a position of rest just above floor level, and means for projecting the sounding element against the floor, said projecting means including biassing means associated with the movable element, and a movable actuator, engageable with the movable element, and operable to retract the movable element against the biassing means, the biassing means, on disengagement of the movable actuator and movable element, causing projection of the movable element against the floor.

The invention will now be described by way of example with reference to the accompanying drawings in which:

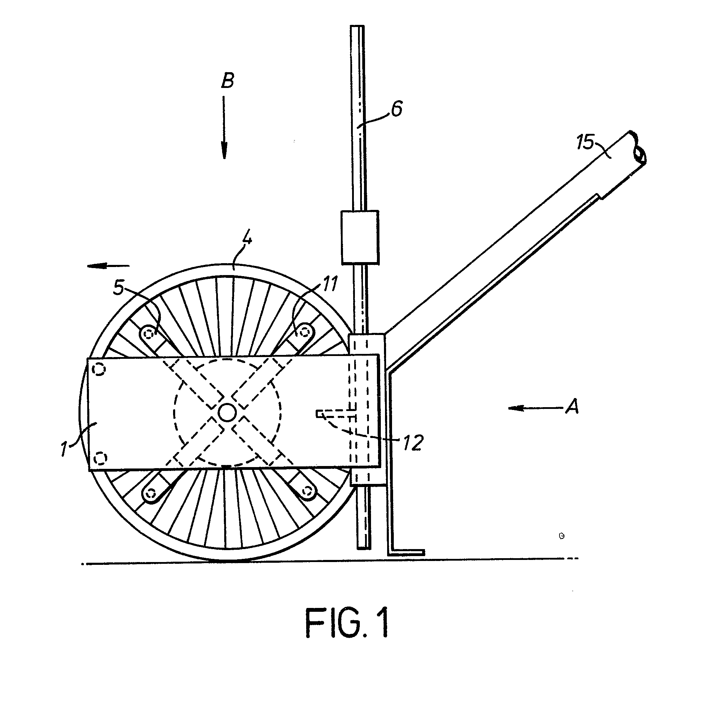

Figure 1 is a side elevation of a preferred embodiment with the nearer wheel and parts 7, 8 and 9 omitted for clarity.

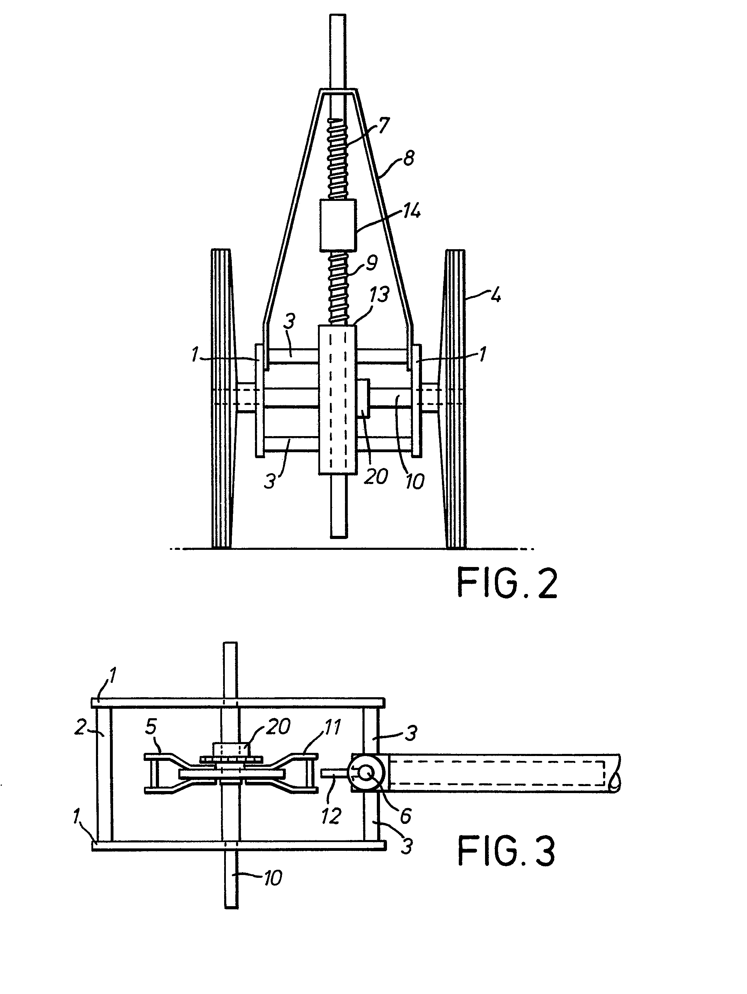

Figure 2 is a view on arrow A in Figure 1 with part 15 omitted for clarity,

Figure 3 is a view on arrow B in Figure 1 but with the wheels omitted,

Figure 4 is a first alternative arrangement, and

Figure 5 is a second alternative arrangement shown diagramatically.

In the drawings a floor testing mechanism consists of a chassis formed from two plates 1 joined together by rods 2 and 3.  The chassis is supported for movement upon two wheels 4 having an axle 10 therebetween.  One wheel is fixed to the axle as a drive, the other is a 'free' wheel.

A rotatable actuator 5 in the form of a star-wheel device, having four radial arms 11, is connected to the axle 10 by unidirectional means 20 such as a ratchet device so that, when the mechanism is in forward motion the actuator is driven, but when the mechanism is in reverse it is not.  The actuator is positioned so that the path of movement of the radial arms 11 causes the arms to engage a projection 12 on a steel rod 6.

The steel rod 6 is disposed vertically and is located in a frame guide 8.  A spring 9 acting between abutments 13 and 14, serves to support the rod 6 just above ground level when at rest and a spring 7, acting between abutment 14 and frame 8, serves to project the steel rod 6 against the floor at intervals determined by the rotation of the actuator 5.

In use the mechanism is wheeled across the floor to be tested by means of the handle 15. The forward rotation of the drive wheel 4 causes the actuator 5 to rotate also through the unidirectional ratchet 20. Thus, as the actuator 5 rotates, the radial arms 11 successively lift and release the rod 6. When being lifted the spring 7 is compressed so that, on release, it projects the rod at the floor 'sounding' the floor. By listening to the sound produced the operator is able to tell whether or not the floor is faulty.

If desired a counter may be incorporated on the mechanism to act as a distance measuring device and a manual dye discharger for indicating the location of a faulty area may be included as well.

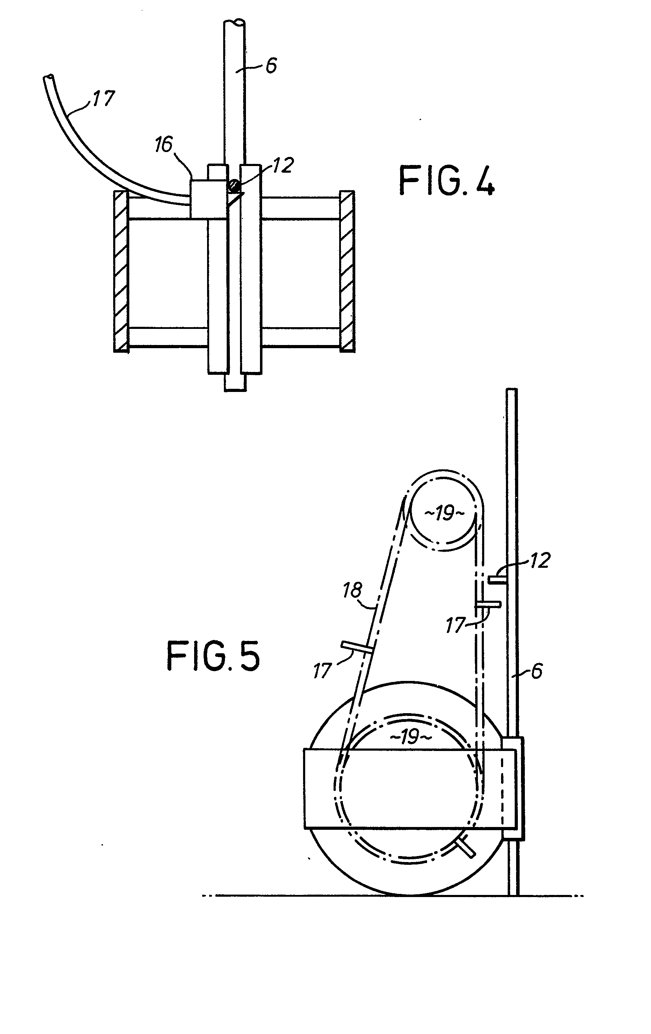

Figure 4 illustrates an alternative arrangement where actuation of the rod 6 is effected at the operator's discretion. In this arrangement the rod 6 is normally held in a spring-loaded position by a releasable catch 16 engaging with the projection 12. On release of the catch 16, by means of a lever actuated Bowden cable 17, the rod 6 is projected against the floor. The rebound, biassing of spring 9 and the wedge shape of catch 16 enable the projection 12 to be captured at the end of each stroke.

Alternatively in Figure 5 the rod 6 may be lifted by spaced projections 17 on a chain 18, driven about two gear wheels 19, by the drive wheel 4.

The mechanism chassis and handle may be made of any suitable material e.g. plastics material. Also if desired more than one rod may be used.

## CLAIMS

1.     A testing mechanism for surfaces such as floors comprising traverse means for supporting the mechanism for movement upon the surface being tested, a movable sounding element supported so as normally in use to lie above floor level, and means for projecting the sounding element against the surface so as to sound the surface.

2.     A testing mechanism according to Claim 1 wherein the traverse means comprises two spaced wheels with an axle therebetween.

3.     A testing mechanism according to Claim 1 or 2 wherein the movable sounding element is a vertical rod biassed into its normal rest position by a first biassing means so that, as the rod is projected against the surface the said biassing means damps oscillations of the rod due to the rebound from the surface.

4.     A testing mechanism according to any one of the preceding claims wherein the projecting means comprises a movable actuator, engageable with the movable element at predetermined intervals, and operable to retract the movable element against second biassing means biassing the movable element in the opposite direction, the movable element, on release of the actuator, being projected against the surface by the stored energy in the second biassing means.

5.       A testing mechanism according to Claim 4 wherein the movable actuator is a rotatable star wheel engageable with an abutment on the movable element.

6.       A testing mechanism according to Claim 4 wherein the movable actuator is a manually operable catch operated at the discretion of the user.

7.       A testing mechanism according to Claim 4 wherein the movable actuator is a chain drive actuator.

8.       A testing mechanism according to Claims 2 and 5 wherein the rotatable star wheel is connected to the axle between the wheels by unidirectional means so that the star wheel is only driven during forward motion.

9.       A testing mechanism according to Claims 3 and 4 wherein the first and second biassing means are coil springs.

10.      A testing mechanism for floors comprising traverse means for supporting the mechanism for movement upon the floor being tested, a movable sounding element supported in a position of rest just above floor level, and means for projecting the sounding element against the floor during movement of the mechanism across said floor, said projecting means including biassing means associated with the movable element, and a movable actuator, engageable with the movable element, and operable, on movement of the testing mechanism, to retract the movable element against the biassing means, the biassing means, on disengagement of the movable actuator and movable element, causing projection of the movable element against the floor.

FIG. 1

FIG. 2

FIG. 3

FIG.4

FIG.5

## DOCUMENTS CONSIDERED TO BE RELEVANT

| Category | Citation of document with indication, where appropriate, of relevant passages | Relevant to claim |
|---|---|---|
| | DE - C - 874 218 (LOSENHAUSENWERK DÜSSELDORFER MASCHINENBAU AG)  <br> * Whole document * | 1,4,7 10 |
| | DE - C - 889 842 (C.A. EINBECK)  <br> * Page 2, lines 24-31, 77-86 * | 1,10 |
| A | FR - A - 2 240 666 (ESSO RESEARCH AND ENGINEERING COMP.)  <br> * Page 1, line 23 to page 2, line 18 * | 1,10 |
| DA | GB - A - 1 523 295 (SHELL INTERNATIONALE RESEARCH MAAT- SCHAPPIJ B.V.)  <br> * Page 1, line 43 to page 2, line 32 * | 1,10 |
| DA | GB - A - 1 521 252 (R.J. SAVAGE)  <br> * Page 5, lines 9-111; figure 1 * | 1,10 |
| DA | US - A - 3 813 929 (B.O. HARDIN et al.)  <br> * Page 1, lines 30-42; figure 1 * | 1,10 |
| DA | US - A - 3 477 283 (C.W. TERRY)  <br> * page 1, lines 30-42; figure 1 * | 1,10 |

./.

**CLASSIFICATION OF THE APPLICATION (Int. Cl.³)**

G 01 N 19/04
29/04

**TECHNICAL FIELDS SEARCHED (Int. Cl.³)**

G 01 N 19/04
29/04
3/30
G 01 M 7/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-01-1982 | KEMPIN |

EPO Form 1503.1  06.78

| Category | Citation of document with indication, where appropriate, of relevant passages | Relevant to claim |
|---|---|---|
| | DE - A - 2 047 930 (SOCIETE NATIONALE INDUSTRIELLE AEROSPATIALE) <br> * Page 2, paragraph 3 to page 4, paragraph 4; figure 1 * <br> & GB - A - 1 331 790 | 1,4 |
| | -- | |
| | US - A - 3 937 065 (L.J. MIL- BERGER et al.) <br> * Column 3, lines 5-32; figure 1 * | 1,2 |
| | ------ | |

DOCUMENTS CONSIDERED TO BE RELEVANT

CLASSIFICATION OF THE APPLICATION (Int. Cl.³)

TECHNICAL FIELDS SEARCHED (Int. Cl.³)